Europäisches Patentamt

European Patent Office — (11) Numéro de publication: **0 402 217**

Office européen des brevets — **A1**

(12) **DEMANDE DE BREVET EUROPEEN**

(21) Numéro de dépôt: **90401493.3**

(22) Date de dépôt: **01.06.90**

(51) Int. Cl.⁵: **B32B 27/18, B32B 27/00, B65D 81/26**

(30) Priorité: **08.06.89 FR 8907607**

(43) Date de publication de la demande:
**12.12.90 Bulletin 90/50**

(84) Etats contractants désignés:
**AT BE CH DE DK ES FR GB GR IT LI LU NL SE**

(71) Demandeur: **GRINGOIRE-BROSSARD S.A.**
**14 avenue de la République**
**F-45311 Pithiviers(FR)**

(72) Inventeur: **Langlois, Pierre**
**4 Quarter rue de Joyenval**
**F-78240 Chambourcy(FR)**
Inventeur: **Rouge, Daniel**
**7 rue de Pithiviers le Vieil**
**F-45300 Pithiviers(FR)**

(74) Mandataire: **Kügele, Bernhard et al**
**NOVAPAT FRANCE 63 bis, boulevard**
**Bessières**
**F-75017 Paris(FR)**

(54) **Film multicouches pour la fabrication d'emballages contenant des produits alimentaires.**

(57) Film multicouches (1) comportant au moins les trois couches successives suivantes : une couche étanche à l'oxygène et à la vapeur d'eau (2), une couche absorbeuse d'oxygène (3), une couche étanche à la vapeur d'eau et perméable à l'oxygène (4).

Le film multicouches de l'invention peut être utilisé pour la fabrication d'emballages contenant des produits alimentaires ou des médicaments.

FIG. 1

# FILM MULTICOUCHES POUR LA FABRICATION D'EMBALLAGES CONTENANT DES PRODUITS ALIMENTAI-RES.

La présente invention a pour objet un film multicouches pour la fabrication d'emballage contenant des produits alimentaires.

La conservation des produits alimentaires nécessite de disposer d'emballages protégeant ces produits notamment du dessèchement, du rancissement ou de l'action d'organismes aérobies comme les moisissures ou les bactéries. Il a été proposé, dans l'art antérieur, pour conserver les aliments d'utiliser des anti-oxydants et d'isoler les aliments dans des emballages stratifiés, étanches à la vapeur d'eau et à l'oxygène.

Il demeure toutefois indispensable, pour empêcher le développement des organismes aérobies présents dans les aliments d'appauvrir sélectivement en oxygène l'atmosphère à l'intérieur de l'emballage.

Le brevet français n° 80/02725 décrit un sac contenant un agent absorbant l'oxygène, ce dernier peut être placé à l'intérieur de l'emballage ou du récipient contenant le produit à conserver. Un tel sac est donc complémentaire d'un emballage ou d'un récipient contenant les produits alimentaires et pour cette raison ne constitue pas une solution satisfaisante pour la présentation des produits alimentaires, le consommateur pouvant être effrayé par la présence d'un sachet dans l'emballage. Par ailleurs, le dépôt d'un tel sachet diminue les cadences de conditionnement des aliments liées à la production industrielle de ces produits de grande consommation.

La présente invention a précisément pour but de proposer un film multicouches pour la fabrication d'emballage assurant une très grande qualité de conservation notamment des produits alimentaires et facilitant leur conditionnement.

A cet effet, le film multicouches selon l'invention comporte au moins les trois couches successives suivantes :
- une couche étanche à l'oxygène et à la vapeur d'eau,
- une couche absorbeuse d'oxygène,
- une couche étanche à la vapeur d'eau et perméable à l'oxygène.

La couche étanche à la vapeur d'eau et à l'oxygène est constituée d'un matériau pésantant une perméabilité à l'oxygène inférieure à 10 cm3 par m2 par 24 heures à une pression d'1 atmosphère, une température de 23° Celsius et pour une humidité relative de 0%, et une perméabilité à la vapeur d'eau inférieure à 10g par m2 par 24 heures à une température de 38° Celsius et pour une humidité relative de 90%.

Parmi les matériaux étanches à la vapeur d'eau et à l'oxygène, on peut citer les associations stratifiées suivantes :
- un film de polyéthylène téréphtalate d'une épaisseur de 12 microns sur lequel est disposé un film de copolymère statistique d'éthylène et d'alcool vinylique d'une épaisseur de 15 microns, sur lequel est disposé un film de polypropylène coulé d'une épaisseur de 30 microns.
- un film de polyvinyle alcool bi-orienté d'une épaisseur de 12 microns disposé sur un film de polypropylène coulé d'une épaisseur de 50 microns.
- un film de polyéthylène téréphtalate d'une épaisseur de 12 microns enduit d'une couche d'un matériau adhésif, par exemple du polyuréthane, à raison de 3g par m2, sur lequel est collé du copolymère de chlorure de vinylidène à raison de 4 g par m2 et sur lequel est disposé un film de polypropylène coulé d'une épaisseur de 40 microns.
- un film de polyéthylène téréphtalate métallisé, celui-ci peut être préparé à partir d'un film de polyéthylène téréphtalate obtenu par extrusion, la métallisation s'effectue dans une enceinte sous vide, où le métal, par exemple de l'aluminium, chauffé jusqu'à la fusion est déposé sur ledit film de polyéthylène téréphtalate que l'on déroule.

La couche absorbeuse d'oxygène est constituée d'un matériau apte à absorber ou retirer l'oxygène présent dans l'atmosphère en contact avec ladite couche. Parmi les matériaux absorbeurs d'oxygène, on peut citer les matériaux réducteurs comme la poudre de fer, des oxalates, des sulfites, de sulfures d'hydrogène et des dithionites, le pyrogallol, le glucose, un complexe amine-cuivre, de la poudre de zinc et toutes compositions contenant un matériau réducteur.

De manière avantageuse, la couche absorbeuse d'oxygène est constituée de poudre de fer associée à du chlorure de sodium ou de potassium.

La couche étanche à la vapeur d'eau et perméable à l'oxygène est constituée d'un matériau présentant une perméabilité à l'oxygène supérieure à 5000 cm3 par m2 et par 24 heures à une pression d'1 atmosphère, une température de 23° Celsius et pour une humidité relative de 0%, et une perméabilité à la vapeur d'eau inférieure à 20g par m2 et par 24 heures à une température de 38° Celsius et pour une humidité relative de 90%.

Selon une forme particulière de l'invention, la couche étanche à la vapeur d'eau et perméable à l'oxygène est constituée de polyéthylène basse densité et présente une épaisseur d'environ 25 microns. De manière avantageuse, les matériaux constitutifs de chacune des couches, plus particulièrement de la couche étanche à la vapeur d'eau et à l'oxygène sont choisis parmi ceux résistants à une température d'environ 130° Celsius. Il est ainsi possible de soumettre l'emballage constitué du film multicouches selon l'invention à un traitement thermique de pasteurisation par exemple par infrarouge ou étuvage.

La couche absorbeuse d'oxygène peut être continue ou être interrompue par des zones permettant le scellage du film multicouches.

Le film multicouches selon l'invention peut être embobiné puis enveloppé dans un film constitué d'un matériau étanche à la vapeur d'eau et à l'oxygène présentant une perméabilité à la vapeur d'eau inférieure à 2g par m2 et par 24 heures et une perméabilité à l'oxygène inférieure à 2cm3 par m2 par 24 heures, afin d'assurer la conservation des qualités dudit film multicouches.

L'invention sera mieux comprise à l'aide de la description qui suit se référant aux dessins annexés dans lesquels :

- la figure 1 représente une vue en coupe d'un film multicouches selon l'invention,
- la figure 2 représente un gâteau pré-cuit emballé dans le film multicouches selon l'invention,

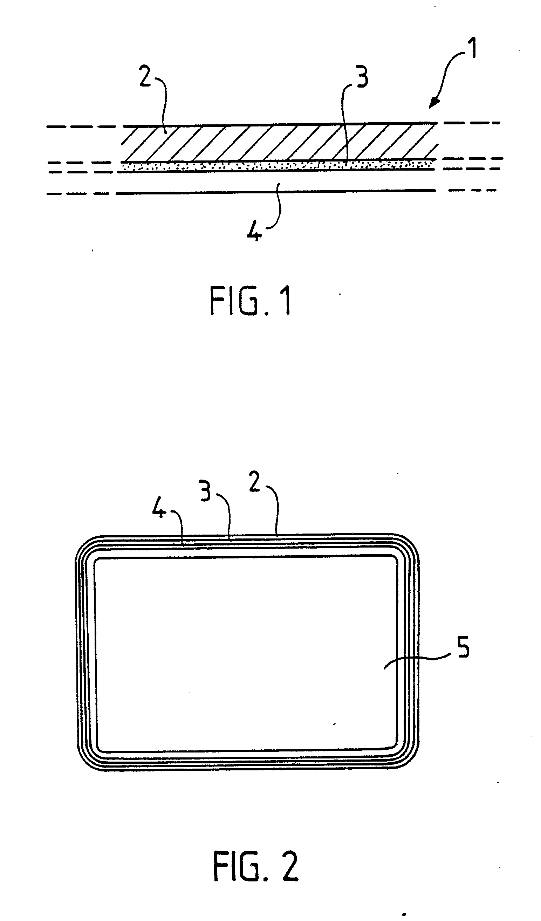

Dans la figure 1 on a représenté un film multicouches 1 constitué des trois couches successives suivantes :

- une couche étanche à la vapeur d'eau et à l'oxygène 2, constituée d'un film de polyéthylène téréphtalate d'une épaisseur de 12 microns sur lequel est disposé un film de copolymère statistique d'éthylène et d'alcool vinylique d'une épaisseur de 15 microns sur lequel est disposé un film de polypropylène coulé d'une épaisseur de 30 microns. Cette couche peut être préparée par co-extrusion ou contre-collage. Par co-extrusion, on assemble les films des différentes résines thermoplastiques en fusion en sortie de filières plates; après formation la couche est refroidie et éventuellement laminée pour obtenir l'épaisseur voulue; il est préférable d'utiliser des adhésifs extrudables entre chaque film de résine. Par contre-collage, le film est enduit d'un matériau adhésif tel que du polyuréthane, on déroule sur cet ensemble le film à contre-coller, le collage étant assuré par un passage entre deux cylindres sous pression.

- une couche absorbeuse d'oxygène 3 constituée de particules réductrices telles des particules de fer. Cette couche est préparée en enduisant la couche précédente étanche à la vapeur d'eau et à l'oxygène 2 d'un adhésif sur lequel on pulvérise les particules de fer, ou bien l'on mélange les particules de fer dans l'adhésif et l'on enduit la couche étanche à la vapeur d'eau et à l'oxygène 2 par ledit mélange.

- une couche étanche à la vapeur d'eau et perméable à l'oxygène 4 constituée de polyéthylène basse densité d'une épaisseur de 25 microns. Cette couche peut être préparée par extrusion-laminage d'un film de polyéthylène basse densité, ledit film de polyéthylène basse densité en fusion, en sortie de l'extrudeuse, est déposé sur la couche absorbeuse d'oxygène 3, elle-même disposée sur la couche étanche à la vapeur d'eau et à l'oxygène 2. L'ensemble passe ensuite entre un cylindre refroidisseur et un cylindre de contre-pression.

Dans la figure 2 on a représenté un gâteau pré-cuit 5 emballé dans un film multicouches 1 constitué d'une couche étanche à la vapeur d'eau et perméable à l'oxygène 4, d'une couche absorbeuse d'oxygène 3, et d'une couche étanche à la vapeur d'eau et à l'oxygène 2.

Le film multicouches selon l'invention peut être utilisé pour emballer des produits alimentaires ou des médicaments. Il permet la conservation microbiologique des produits alimentaires en particulier à base de céréales, la conservation des pigments colorants naturels fragiles, en particulier la couleur des fruits et légumes, la conservation du gout des produits alimentaires fragiles, en particulier le gout des fruits et légumes. Il permet en outre d'augmenter les cadences de conditionnement des produits alimentaires dans le cadre d'une production industrielle de ces produits de grande consommation tout en offrant au consommateur une présentation agréable desdits produits.

La présente invention a été décrite aux moyens d'exemples de réalisation sans pour autant être limitée à la forme particulière de ces exemples. De nombreuses modifications peuvent être envisagées sans sortir de l'étendue de l'invention.

## Revendications

1 - Film multicouches, caractérisé en ce qu'il comporte au moins les trois couches successives suivantes :
- une couche étanche à l'oxygène et à la vapeur d'eau,
- une couche absorbeuse d'oxygène,
- une couche étanche à la vapeur d'eau et perméable à l'oxygène.

2 - Film multicouches selon la revendication 1, caractérisé en ce que la couche étanche à la vapeur d'eau et l'oxygène présente une perméabilité à l'oxygène inférieure à 10cm3 par m2 et par 24 heures à une presssion d'1 atmosphère, une température de 23° Celsius et pour une humidité relative de 0%, et une perméabilité à la vapeur d'eau inférieure à 10g par m2 et par 24 heures à une température de 38° Celsius et pour une humidité relative de 90%.

3 - Film multicouches selon la revendication 2, caractérisé en ce que la couche étanche à la vapeur d'eau et à l'oxygène est constituée d'un film de polyéthylène téréphtalate d'une épaisseur de 12 microns sur lequel est disposé un film de copolymère statistique d'éthylène et d'alcool vinylique d'une épaisseur de 15 microns sur lequel est disposé un film de polypropylène coulé d'une épaisseur de 30 microns.

4 - Film multicouches selon l'une quelconque des revendications 1 à 3, caractérisé en ce que la couche absorbeuse d'oxygène est constituée d'un matériau réducteur ou d'une composition contenant ledit matériau réducteur.

5 - Film multicouches selon la revendication 4, caractérisé en ce que la couche absorbeuse d'oxygène est essentiellement constituée de particules de fer.

6 - Film multicouches selon l'une quelconque des revendications 1 à 5, caractérisé en ce que la couche étanche à la vapeur d'eau et perméable à l'oxygène est constituée d'un matériau présentant une perméabilité à l'oxygène supérieure à 5000 cm3 par m2 et par 24 heures à une pression d'1 atmosphère, une température de 23° Celsius et pour une humidité relative de 0%, et une perméabilité à la vapeur d'eau inférieure à 20g par m2 et par 24 heures à une température de 38° Celsius et pour une humidité relative de 90%.

7 - Film multicouches selon la revendication 6, caractérisé en ce que la couche étanche à la vapeur d'eau et perméable à l'oxygène est constituée de polyéthylène basse densité et présente une épaisseur de 25 microns.

8 - Film multicouches selon l'une quelconque des revendications 1 à 7, caractérisé en ce que les matériaux constitutifs de chacune des couches sont choisis parmi ceux résistants à une température d'environ 130° Celsius.

FIG. 1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-4041209 (SCHOLLE)<br>* colonne 3, ligne 21 - colonne 4, ligne 6 *<br>* colonne 4, lignes 12 - 32; revendications 1, 2 * | 1 | B32B27/18<br>B32B27/00<br>B65D81/26 |
| Y | | 4, 5 | |
| A | | 2, 3,<br>6-8 | |
| | --- | | |
| Y | GB-A-2068991 (MITSUBISHI GAS CHEMICAL CO.)<br>* page 1, lignes 60 - 90 *<br>* page 1, ligne 128 - page 2, ligne 11 *<br>* page 2, lignes 28 - 40 *<br>* page 2, lignes 60 - 74 * | 4, 5 | |
| | --- | | |
| A | EP-A-83826 (AMERICAN CAN CO.)<br>* revendications 1-6 * | 1-7 | |
| | --- | | |
| A | US-A-3429717 (COOK)<br>* le document en entier * | 1-7 | |
| | ----- | | |

**DOMAINES TECHNIQUES RECHERCHES (Int. Cl.5 )**

B32B
B65D81

Le présent rapport a été établi pour toutes les revendications

| Lieu de la recherche | Date d'achèvement de la recherche | Examinateur |
|---|---|---|
| LA HAYE | 13 JUILLET 1990 | IBARROLA TORRES O. |